# EUROPÄISCHE PATENTSCHRIFT

(11) **EP 3 323 010 B1**
(45) Veröffentlichungstag und Bekanntmachung des Hinweises auf die Patenterteilung: **09.01.2019**
(21) Anmeldenummer: 16747864.3
(22) Anmeldetag: 13.07.2016
(51) Int. Cl.: G02B 21/14, G02B 21/36

(54) **VERFAHREN ZUR PHASENKONTRASTMIKROSKOPIE, OPTIKEINHEIT SOWIE PHASENKONTRASTMIKROSKOP**
PHASE-CONTRAST MICROSCOPY METHOD, OPTICAL UNIT, AND PHASE-CONTRAST MICROSCOPE
PROCÉDÉ RELATIF À LA MICROSCOPIE À CONTRASTE DE PHASE, UNITÉ OPTIQUE ET MICROSCOPE À CONTRASTE DE PHASE

(30) Priorität: 14.07.2015 DE 102015111426
(43) Veröffentlichungstag der Anmeldung: 23.05.2018
(73) Patentinhaber: Fraunhofer Gesellschaft zur Förderung der angewandten Forschung E.V., 80686 München (DE)
(72) Erfinder: SCHENK, Friedrich, 70825 Korntal-Münchingen (DE); DIEDERICH, Benedict, 33378 Rheda-Wiedenbrück (DE)
(74) Vertreter: Naeven, Ralf
(86) Internationale Anmeldenummer: PCT/EP2016/066671
(87) Internationale Veröffentlichungsnummer: WO 2017/009383

(56) Entgegenhaltungen:
- WO-A1-2007/038787
- WO-A1-2014/031797
- WO-A1-2016/084551
- DE-A1- 2 650 816
- JP-A- 2006 091 506
- JP-A- 2007 293 267
- JP-A- 2009 122 356
- US-A- 3 655 274
- US-A1- 2012 257 040

## Beschreibung

Die Erfindung betrifft ein Verfahren zur Phasenkontrastmikroskopie gemäß dem Oberbegriff des Anspruchs 1 sowie ein Phasenkontrastmikroskop gemäß dem Oberbegriff des Anspruchs 4.

Die Phasenkontrastmikroskopie erfolgt überwiegend im Durchlicht und wird an transparenten Objekten wie zum Beispiel lebenden Zellen eingesetzt. Ohne besondere Maßnahmen zur Erhöhung des Kontrastes zwischen von einer Probe ungebeugter Direktstrahlung und von der Probe gebeugter Strahlung ist die Sichtbarkeit der Probe in der Regel unbefriedigend. Ein Einfärben zur Erhöhung des Kontrastes hat insbesondere bei lebenden Zellen einen ungewünschten Einfluss auf die Probe.

Mittels der Phasenkontrastmikroskopie kann eine Kontrasterzeugung ohne Veränderung der Probe erreicht werden. Hierfür ist es bekannt, mittels einer im Kondensor angeordneten und zumeist ringförmigen Phasenblende ein Beleuchtungsbündel mit einer ausreichenden Beleuchtungsapertur zu erzeugen. Ein von der Probe ungebeugter Anteil des Beleuchtungsbündel, welches das Hauptmaximum in ursprünglicher Ausbreitungsrichtung der Strahlung ist und im Folgenden Direktstrahlung genannt wird, wird mittels eines in der bildseitigen Objektivbrennebene angeordneten und in der Regel in Form eines Phasenrings vorliegenden Phasenverschiebungselements, welches ein phasenverschiebendes Verzögerungselement sowie einen Graufilter umfasst, phasenverschoben und abgeschwächt. Die Probenstrahlung erfährt beim Durchlaufen der Probe ebenfalls eine Phasenverschiebung. Durch Interferenz der mittels des Phasenverschiebungselements manipulierten Direktstrahlung mit der Probenstrahlung wird die zwischen Direktstrahlung und Probenstrahlung gegebene resultierende Phasenverschiebung in eine Amplitudenänderung umgewandelt, wodurch im Zwischenbild der Probe die gewünschte Kontrasterhöhung erreicht wird. Wichtig für den Phasenkontrast ist es, dass die Abbildung der Öffnung der Phasenblende vom Phasenverschiebungselement in der hinteren Objektivbrennebene vollständig abgedeckt wird, also keine Direktstrahlung am Phasenverschiebungselement vorbeiläuft und das Zwischenbild stört.

Wenn die zu untersuchende Probe in Flüssigkeit, im Folgenden als Objektflüssigkeit bezeichnet, in einem offenen Probenbehälter angeordnet ist, bildet sich ein Objektflüssigkeitsmeniskus, welcher insbesondere am Rand des Probenbehälters in der Regel zu einem vom rechten Winkel zur Schwerkraftrichtung und damit zur Hauptstrahlungsrichtung des Beleuchtungsbündels abweichenden Verlauf der Oberfläche der Objektflüssigkeit aufweist und somit das Beleuchtungsbündel entsprechend bricht. Dieser Meniskus- oder Randeffekt hebt den Phasenkontrasteffekt zum Teil auf und führt zu Artefakten im Zwischenbild. Dies ist insbesondere bei genormten Zellkulturgefäßen, so genannten Mikrotiterplatten der Fall, die aus einer Vielzahl voneinander isolierter, üblicherweise runder napfförmiger Probenbehälter, so genannter Wells, bestehen, in denen die zu untersuchenden Zellen umgeben von einem Nährmedium kultiviert werden können. Die gängigsten Formate der Mikrotiterplatten weisen zwischen 6 und 1536 einzelner Wells auf einer Grundfläche von 128 x 85 mm auf. Es entsteht ein konkav gekrümmter Objektflüssigkeitsmeniskus innerhalb jedes Wells, dessen störender Einfluss mit abnehmendem Durchmesser des Wells größer wird. Je stärker der Meniskus ausgebildet ist, also insbesondere zum Rand des Wells hin, umso größer ist der Anteil der Direktstrahlung, welche am Phasenring vorbei geführt wird, so dass das Mikroskop zunehmend im Hellfeld arbeitet, womit der Kontrast beim Abbilden der Zellen signifikant sinkt. Da es außerdem zu einer stärkeren Belichtung eines abbildenden Kamerachips kommt, kann eine Überbelichtung im resultierenden Mikroskopiebild die Folge sein.

Es sind mehrere Ansätze bekannt, dem dargestellten Problem im Zusammenhang mit der Ausbildung des Objektflüssigkeitsmeniskus bei Mikrotiterplatten zu begegnen. So offenbart die EP 1 859 866 A1 eine Mikrotiterplatte mit einer hydrophoben Materialkombination für die Innenwandung der Wells, womit die Ausbildung eines Meniskus der Objektflüssigkeitsoberfläche verhindert werden soll. Hier sind die damit verbundenen höheren Herstellungskosten der Mikrotiterplatte nachteilig.

Aus der US 2010/0197004 A1 oder der US 6,074,614 A ist es bekannt, die Mikrotiterplatte mit einem speziell geformten Plattendeckel zu versehen, welcher transparente Zylinder aufweist, die bei aufgelegtem Deckel in die einzelnen Wells hineinragen und dort mit der die Probe aufweisenden Objektflüssigkeit in Kontakt treten.

Die Unterseite dieser Zylinder ist eben, so dass die Objektflüssigkeitsoberfläche flach gedrückt und der Meniskus mechanisch zerstört wird. Ähnliches schlägt die JP H05-181 068 A vor, wonach eine transparente und vorzugsweise hydrophobe flache Platte auf die Objektflüssigkeit gelegt wird, um die Ausbildung eines Meniskus zu verhindern.

Aus der US 6,238,911 B1 ist es bekannt, die Mikrotiterplatte mit einem Plattendeckel abzudecken, der oberhalb eines jeden Wells eine zur Objektflüssigkeitslinse inverse Kunststofflinse aufweist. Auf diese Weise wird eine optische Korrektur bewirkt. Neben den besonderen Herstellungskosten ist nachteilig, dass die Ausgleichskunststofflinsen des Plattendeckels auf eine spezielle Oberflächenkrümmung der Objektflüssigkeit in den Wells ausgerichtet sind. Falls die Objektflüssigkeitsart wechselt, funktioniert die optische Korrektur gegebenenfalls nicht mehr, da unterschiedliche Objektflüssigkeiten unterschiedliche hydrostatische Wechselwirkungen zur Well-Innenwandung aufweisen, so dass sich unterschiedliche Oberflächenkrümmungen bilden.

Ein Verfahren und ein Phasenkontrastmikroskop der eingangs genannten Art sind aus der JP 2006-091 506 A bekannt, wonach eine Korrekturlinse eingesetzt wird, die zum einen zur Veränderung der Brechkraft in ihrer Form veränderbar ist und zum anderen innerhalb einer zur optischen Achse des Phasenkontrastmikroskops senkrechten Ebene verfahren werden kann. Die Veränderung der Brechkraft sowie die Verschiebbarkeit der Korrekturlinse dienen zur Anpassung an die Oberflächenkrümmung der Objektflüssigkeit sowie zur Anpassung an die Position der Probe innerhalb eines Wells. Es ist offenbart, für den Fall, dass die Probe nicht mittig in einem Well positioniert ist, die Mikrotiterplatte so zu verschieben, dass sich die Probe in der optischen Achse des Phasenkontrastmikroskops befindet. Dies kann jedoch bedeuten, dass die Mittelachse des zugehörigen Wells zur optischen Achse des Mikroskops beabstandet ist. Hierzu schlägt die JP 2006-091 506 A vor, die Korrekturlinse derart zu verschieben, dass deren optische Mittelachse mit der Mittelachse des Wells zusammenfällt.

Aus der JP H08-005 929 A ist ein Phasenkontrastmikroskop bekannt, bei dem eine Korrekturlinse in den Strahlengang eingeschwenkt werden kann, wenn die Krümmung der Oberfläche der Objektflüssigkeit störend ist. Eine Veränderbarkeit der Form der Korrekturlinse ist nicht vorgesehen. Somit müssten für verschiedene Oberflächenkrümmungen verschiedene Korrekturlinsen vorgesehen werden.

Die JP 2009-122 356 A offenbart ein Phasenkontrastmikroskop, bei dem eine Phasenblende lateral verschoben wird, um trotz Verzerrungen des Strahlenverlaufs aufgrund des Meniskus im Probenbehälter zu einer Überdeckung mit einem Phasenring zu kommen.

Die JP 2007-293 267 A befasst sich mit Phasenkontrastmikroskopie und die Korrektur von Verzerrungen oder Ablenkungen des Strahlenganges am Probenbehälter, wobei nicht der Meniskus des Materials angesprochen ist sondern die Form oder Ausrichtung des Bodens des Probenbehälters. Es wird verdeutlicht, dass ein verkippter Probenbehälter eine ungewünschte Auslenkung oder Verzerrung erzeugt. Für den Ausgleich der Verzerrung werden drei verschiedene Methoden vorgeschlagen, nämlich eine laterale Verschiebung des Phasenrings, eine Änderung der Position oder Ausrichtung des Probenbehälters (z.B. Schwenkung) oder eine Verschiebung des Beleuchtungssystems.

Ein weiteres Verfahren zur Phasenkontrastmikroskopie sowie ein Phasenkontrastmikroskop sind aus der US 2012/0257040 A1 bekannt. Dort wird vorgeschlagen, anstelle einer üblichen Ringblende eine verstellbare Einheit einzusetzen, mit der der Querschnitt des Beleuchtungsbündels veränderbar ist. Hierzu wird ein Flüssigkristall-Display (LCD) eingesetzt, das als Phasenblende mit formveränderbarer Öffnung fungiert. Mittels einer über einen halbdurchlässigen Spiegel zuschaltbaren Bertrand-Linse wird kontrolliert, ob die Direktstrahlung komplett auf den Phasenring fällt. Erforderlichenfalls wird die Form der mit dem LCD realisierten Phasenblende verändert, um eine möglichst gute Überdeckung der Direktstrahlung mit dem Phasenring zu erreichen. Allerdings dürfte die flexible Verformung der Blende durch das LCD allein nicht zur Behebung der negativen Auswirkungen des Meniskuseffektes in der Lage sein. Das LCD kann nämlich nur Anpassungen der Phasenblendenform innerhalb der zur Bestrahlungsrichtung senkrechten Ebene bewirken, was als alleinige Maßnahme nur zu einer geringfügigen Korrektur der Verzerrungen der Direktstrahlung führt. Zudem funktioniert dies im befriedigenden Maße nur, solange die Meniskuskrümmung einen gewissen Grad nicht übersteigt. Der Objektflüssigkeitsmeniskus innerhalb des Wells einer Mikrotiterplatte verschiebt nämlich nicht nur das Abbild der Blendenöffnung innerhalb der hinteren Objektivbrennebene, sondern verschlechtert auch die Abbildungsbeziehung zwischen der Blendenöffnung und dem Phasenring in axialer Richtung durch einen örtlich variierenden Abbildungsmaßstab. Es kommt zu einer Art Bildfeldwölbung und einer Verzeichnung des Abbildes der Blendenöffnung. Somit kann die Blendenöffnung nicht scharf in der hinteren Objektivbrennebene abgebildet werden.

Die WO 2014031797 A1 offenbart Vorrichtungen zur Korrektur von Störungen im Strahlenverlauf, welche für verschiedene Anwendungen brauchbar sein soll. Allgemein ist die Mikroskopie, jedoch kein Phasenkontrastmikroskop im Speziellen angesprochen. Demnach werden Wellenfronten mittels einer Vorrichtung zur Modifizierung, z.B. eines deformierbaren Spiegels oder eines transmissiven räumlichen Phasenmodulators, modifiziert. Dabei werden Walsh-Funktionen eingesetzt, um eine Codierung zu erzeugen, die zur Steuerung der Vorrichtung zur Modifizierung dient.

Ein flüssigkeitsgefülltes Prisma ist aus der US 3,514,192 bekannt, welches mit transparenten Begrenzungswänden versehen ist, deren Winkel zueinander veränderbar sind, so dass die mittels des Prismas erzeugte Brechung steuerbar ist. Es ist bekannt, das flüssigkeitsgefüllte adaptive Prisma zur Kompensation von Bildbewegungen oder zur Minimierung von chromatischer Dispersion einzusetzen.

Aus der US 3,655,274 A ist ein unter Schwerkraft zu betreibendes variables Prisma bekannt, bei dem in zwei übereinander liegenden in vertikaler Richtung transparent begrenzten Kammern jeweils ein bootartiges ebenfalls transparentes Element auf einer Flüssigkeit aufschwimmt. Durch Kippbewegungen kann die untere Begrenzung der jeweiligen Kammer aus der horizontalen Orientierung herausbewegt werden, während das bootartige Element aufgrund der durch die Schwerkraft vorgegebenen Flüssigkeitsoberfläche in der Horizontalen bleibt. Es sind somit zwei übereinander liegende Prismen erzeugt, deren Form sich abhängig vom Kippwinkel ändert. Als Anwendungen werden beispielsweise ein optisches Lot, z.B. für Bohrungen oder Gebäudekonstruktionen, Bildstabilisation, z.B. für Meeresbodenbeobachtungen, oder die Messung von Brückenschwingungen genannt. Anwendungen in der Mikroskopie werden nicht angesprochen. Ähnliches offenbart die DE 26 50 816 A für die Ausbildung eines optischen Lotes.

Die WO 2007038787 A1 offenbart ein Verfahren und eine Vorrichtung zur Herstellung eines Bildes einer anatomischen Struktur, wobei die Vorrichtung in den lebenden Körper eingesetzt werden kann. Die Vorrichtung kann dabei eine variable Linse zur elektronischen Verstellung der Brennweite aufweisen, wie sie aus Mobilfunktelefonen bekannt ist. Damit kann auf sich ändernde Abstände zwischen einer Optikeinheit und einem zu untersuchenden Gewebe reagiert werden.

Es ist nun Aufgabe der vorliegenden Erfindung, ein Verfahren zur Phasenkontrastmikroskopie sowie ein Phasenkontrastmikroskop der eingangs genannten Art zur Verfügung zu stellen, die auf alternative Weise den Nachteilen durch eine Krümmung der Objektflüssigkeitsoberflächen an den Probenbehältern entgegenwirken.

Bei einem Verfahren zur Phasenkontrastmikroskopie der eingangs genannten Art wird die Aufgabe durch die kennzeichnenden Merkmale des Anspruchs 1 gelöst. Demnach wird zur Kompensation einer aufgrund optischer Brechung an der Objektflüssigkeit gegebenen Änderung der Hauptstrahlungsrichtung des Beleuchtungsbündels das Beleuchtungsbündel vor Eintritt in die Objektflüssigkeit mittels eines in seiner Form veränderbaren optischen Ablenkungselements abgelenkt.

Die Kompensation kann vorteilhaft so gestaltet werden, dass die Hauptstrahlungsrichtung des Beleuchtungsbündels nach Verlassen des Probenbehälters parallel zu seiner vor Ablenkung durch das Ablenkungselement gegebenen ursprünglichen Hauptstrahlungsrichtung ist. Es kommt lediglich zu einem seitlichen Versatz in der Hauptstrahlungsrichtung, der jedoch durch eine entsprechende entgegengesetzte seitliche Verschiebung des Beleuchtungsbündels vor dessen Eintreten in das Ablenkungselement korrigiert werden kann. Letzteres erfolgt z.B. durch eine entsprechende Verschiebung der Quelle des Beleuchtungsbündels, z.B. einer Phasenblende.

Auf diese Weise kann die Wirkung der Objektflüssigkeitsoberfläche auf das Beleuchtungsbündel zumindest teilweise kompensiert und eine Überdeckung der Direktstrahlung mit dem Phasenverschiebungselement erreicht werden. Die Veränderbarkeit des Ablenkungselements in Form und/oder Position erlaubt es, die Ablenkung des Beleuchtungsbündels in Abhängigkeit vom Winkel der Objektflüssigkeit zur optischen Achse des Mikroskops zu wählen.

Die Hauptstrahlungsrichtung des Beleuchtungsbündels im Sinne dieser Erfindung ist seine sich in Strahlrichtung erstreckende Mittelachse, im Fall eines symmetrischen Beleuchtungsbündels, wie dies insbesondere bei einer ringförmigen Phasenblende gegeben sein kann, seine Symmetrieachse.

Das erfindungsgemäße Verfahren kann auch so ausgeführt werden, dass eine Überlappung von Direktstrahlung und Phasenverschiebungselement z.B. mittels einer Bertrandlinsen-Einheit, kontrolliert und zur Optimierung der Überlappung die Querschnittsgeometrie des Beleuchtungsbündels und/oder die in einer Ebene senkrecht zur optischen Achse des Beleuchtungsbündels gegebene Position vor dessen Auftreffen auf das Ablenkungselement mittels mindestens eines veränderbaren optischen Anpasselements verändert wird.

Die Kompensation des Einflusses des Meniskus der Objektflüssigkeit kann durch die Einwirkung des veränderbaren optischen Anpasselements, welches vorzugsweise in Strahlungsrichtung vor dem Ablenkungselement angeordnet ist, unterstützt werden. Wenn das Beleuchtungsbündel mittels einer Phasenblende geformt wird, können die Änderung der Position des Beleuchtungsbündels und/oder seiner Querschnittsgeometrie durch eine Formänderung der Öffnung der Phasenblende erfolgen, welche dann gleichzeitig das optische Anpasselement darstellt. Die formveränderbare Phasenblende kann beispielsweise - wie aus dem oben dargestellten Stand der Technik gemäß der US 2012/0257040 A1 bekannt - mittels eines LCD realisiert werden. Ist schließlich sichergestellt, dass die Abbildung der Phasenblendenöffnung vollständig auf das Phasenverschiebungselement fällt, ist der Kontrast des Bildes der zu mikroskopierenden Probe maximal. Denkbar ist auch die Herstellung des Beleuchtungsbündels ohne Phasenblende, jedoch mittels einer geeigneten Strahlungsquelle, z.B. einem LED-Array. Das Anpasselement kann in diesem Fall das LED-Array sein, wobei für unterschiedliche Formen des Beleuchtungsbündels die LEDs unterschiedlich geschaltet werden.

Das erfindungsgemäße Verfahren kann auch so ausgeführt werden, dass im Strahlengang vor dem Probenbehälter ein optisches Muster erzeugt, eine im Bereich des Probenbehälters erzeugte optische Verzerrung des Musters erfasst und das Maß der Musterverzerrung zur automatischen Steuerung der Position und/oder Form des optisches Ablenkungselements und/oder zur Steuerung des optischen Anpassungselements genutzt wird. Die Erzeugung des optischen Musters, z.B. mit einer regelmäßigen Gitterstruktur, kann durch eine gesonderte Einheit oder ebenfalls durch das LCD erfolgen. Auf diese Weise kann eine vollautomatische Optimierung des Kontrastes des Mikroskopbildes durch Regelung insbesondere der Parameter für das Ablenkelement und/oder das Anpasselement eingerichtet werden.

Es wird eine Optikeinheit umfassend das optische Ablenkungselement eingesetzt, wobei dessen Eintrittsfläche durch eine in einem Schwerefeld gebildete Oberfläche einer viskosen Masse vorgegeben ist, welche zwischen Eintrittsfläche und Austrittsfläche angeordnet ist. Damit ist eine sehr effektive und einfache aber wirkungsvolle Variante eines adaptiven Ablenkungselements gegeben.

In einem Phasenkontrastmikroskop eingesetzt, dient das Ablenkungselement dazu, die Hauptstrahlungsrichtung des Beleuchtungsbündels bei Bedarf abzulenken. Die Optikeinheit ist jedoch auch außerhalb eines Phasenkontrastmikroskops einsetzbar, um die Variabilität des adaptiven Ablenkungselements zur gesteuerten Manipulation einer das Ablenkungselement durchlaufenden Strahlung nutzen zu können.

Die viskose Masse hat eine höhere optische Dichte als die das Ablenkungselement umgebende Atmosphäre, insbesondere Luft, und kann z.B. aus einer Flüssigkeit, beispielsweise Wasser, oder einem Gel bestehen. Die viskose Masse kann auch in Material und/oder optischer Eigenschaft der optischen Dichte der Objektflüssigkeit im Probenbehälter entsprechen.

Das Ablenkungselement kann einen offenen Behälter mit der viskosen Masse umfassen, so dass die Eintrittsfläche von der Oberfläche der viskosen Massen unmittelbar gebildet ist.

Um unerwünschte Auswirkungen einer Bewegungen der Oberfläche der viskosen Masse, z.B. aufgrund von Erschütterungen, zu mildern oder gänzlich auszuschließen, kann die Optikeinheit auch so ausgebildet sein, dass die Eintrittsfläche durch ein mittelbar oder unmittelbar auf der Oberfläche der viskosen Masse schwimmendes oder aufliegendes, starres und transparentes Abdeckungselement gebildet ist. Das Abdeckungselement weist bevorzugt einen erhöhten Rand auf, um ein Überschwappen der viskosen Masse auf die obere Oberfläche des Abdeckungselements zu vermeiden. Durch die Oberfläche der viskosen Masse ist die Lage des Abdeckungselements im Raum und damit auch die Lage der Eintrittsfläche vorgegeben.

Erfindungsgemäß ist die Optikeinheit mit Mitteln zum Verschwenken des Ablenkungselements um mindestens eine Schwenkachse versehen. Im Schwerefeld bleibt die die Eintrittsfläche vorgebende obere Oberfläche der viskosen Masse, vorzugsweise eine Flüssigkeit, auch bei einer Schwenkbewegung um eine zur Schwerkraftrichtung senkrechten Schwenkachse horizontal ausgerichtet, während die durch einen in einer transparenten Bodenwand eines Trägers für die viskose Masse gegebene Austrittsfläche bei der Schwenkbewegung ihren Winkel zur Schwerkraftrichtung ändert. Somit ändert sich auch der Winkel zwischen der Austrittsfläche und der Eintrittsfläche, womit ein adaptives Ablenkungselement realisiert wird. Vorzugsweise sind zwei linear zueinander unabhängige Schwenkachsen vorgesehen.

Bei einem Phasenkontrastmikroskop der eingangs genannten Art wird die Aufgabe durch die kennzeichnenden Merkmale des Anspruchs 4 gelöst. Bevorzugte Ausführungsformen des erfindungsgemäßen Phasenkontrastmikroskops ergeben sich aus den abhängigen Ansprüchen 5 bis 9.

Die Optikeinheit kann mit Mitteln zur translatorischen und/oder rotatorischen Bewegung des Ablenkungselements ausgestattet sein. Diese Maßnahmen erhöhen die Möglichkeiten zur Manipulation der Strahlung mittels des adaptiven Ablenkungselements weiter.

Wie bereits weiter oben dargestellt, wird die Überlappung von Direktstrahlung und Phasenverschiebungselement optisch kontrolliert, wozu bevorzugt eine Bertrand-Linseneinheit mit mindestens einer in ihrer Fokuslage variablen formbaren Linse eingesetzt wird. Die Fokuslage kann mit Mitteln zur Steuerung der mindestens einen formbaren Linse eingestellt werden. Auf diese Weise ist es möglich, die Bertrand-Linseneinheit dauerhaft im Mikroskop zu belassen und zwischen einem Betriebszustand zur Mikroskopie, d.h. zur Betrachtung der Probe, und einem Betriebszustand zur Kontrolle der Überlappung der Direktstrahlung mit dem Phasenverschiebungselement, d.h. zur Kontrolle der korrekten Abbildung der Phasenblendenöffnung auf das Phasenverschiebungselement, umzuschalten. Ein Einschwenken einer Bertrandlinse oder der Einsatz eines halbdurchlässigen Spiegels ist somit nicht mehr erforderlich.

Im Folgenden werden anhand von Figuren eine bevorzugte Ausführungsform des erfindungsgemäßen Verfahrens zur Phasenkontrastmikroskopie und bevorzugte Ausführungsformen einer Optikeinheit sowie des erfindungsgemäßen Phasenkontrastmikroskops dargestellt. Es zeigen schematisch
- Fig. 1:: ein Phasenkontrastmikroskop;
- Fig. 2a:: einen Ausschnitt des Phasenkontrastmikroskops ohne Ablenkung des Beleuchtungsbündels durch ein Ablenkungselement;
- Fig. 2b:: die Position des Phasenrings in der in Fig. 2a dargestellten Situation;
- Fig. 3a:: den Ausschnitt gemäß Fig. 2a mit Ablenkung des Beleuchtungsbündels;
- Fig. 3b:: die Position des Phasenrings in der in Fig. 3a dargestellten Situation;
- Fig. 4:: einen weiteren Ausschnitt des Phasenkontrastmikroskops mit Bertrand-Linseneinheit in einem ersten Betriebszustand der Bertrand-Linseneinheit und
- Fig. 5:: den Ausschnitt gemäß Fig. 4 in einem zweiten Betriebszustand der Bertrand-Linseneinheit.

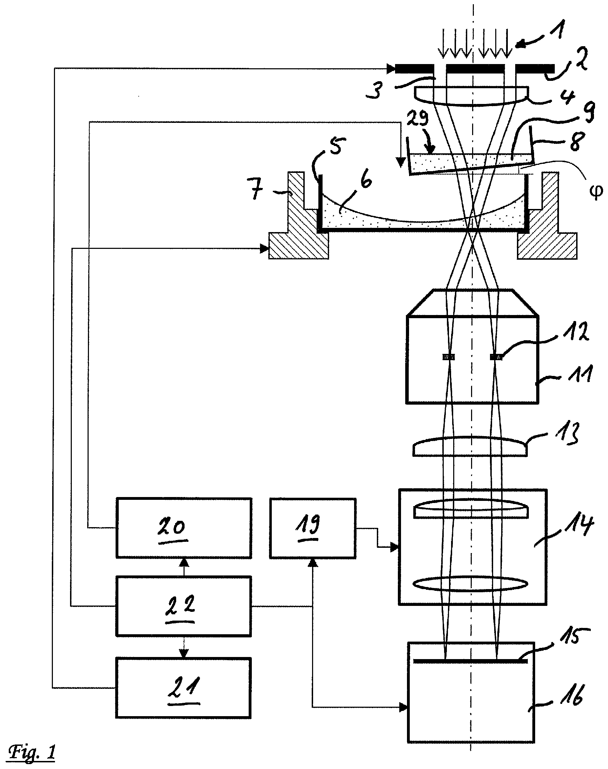

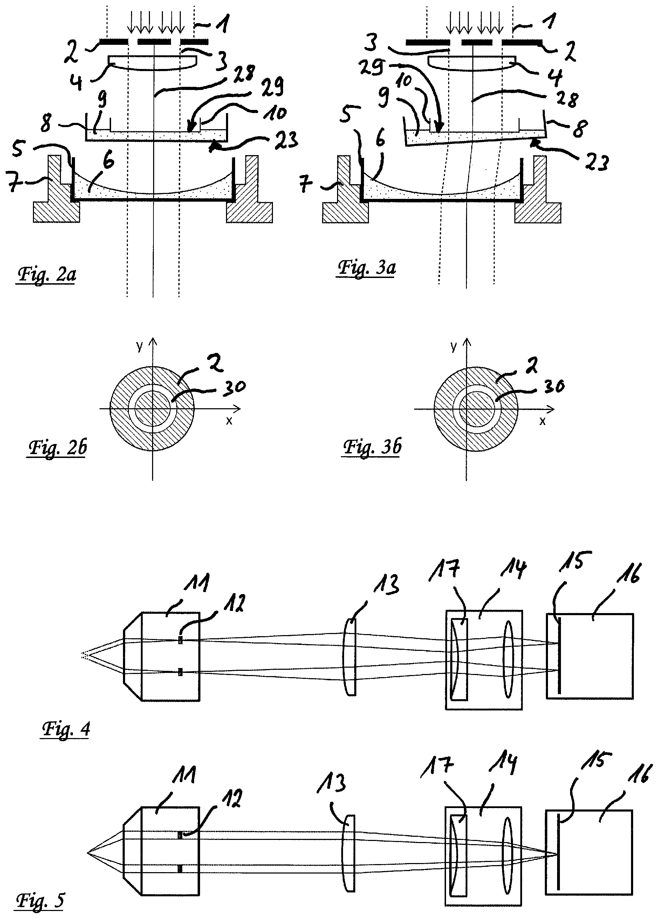

Fig. 1 zeigt schematisch ein Phasenkontrastmikroskop, wobei die einzelnen Bestandteile zur Vereinfachung der Darstellung von den tatsächlichen Größenverhältnissen abweichen. Ein von einer nicht dargestellten Lichtquelle erzeugtes Quell-Strahlungsbündel 1 trifft auf eine Phasenblende 2, durch die ein Beleuchtungsbündel 3 tritt. In den Fig. 2 und 3 ist die Querschnittsform des Beleuchtungsbündels 3 nicht dargestellt sondern lediglich schematisch ein Bereich angedeutet, innerhalb dessen das Beleuchtungsbündel 3 mit einer hier mit durchgezogener Linie dargestellten Hauptstrahlungsrichtung 28 verläuft.

Nach Austritt aus der Phasenblende 2 trifft das Beleuchtungsbündel 3 auf einen Kondensor 4, der das Beleuchtungsbündel 3 auf eine hier nicht gesondert dargestellte Probe fokussiert, die sich innerhalb eines Probenbehälters 5 befindet, welcher eine Objektflüssigkeit 6 aufweist. Der Probenbehälter 5 kann zum Beispiel der Napf einer Mikrotiterplatte sein. Der Probenbehälter 5 kann jedoch auch ein einzelner Behälter oder eine sonstige Behälterkombination sein. In den Fig. 1, 2a und 3a wird der Probenbehälter 5 von einer Objekthalterung 7 getragen, deren Position vorzugsweise mittels einer Steuerung 22 veränderbar ist. In entsprechender Weise würde auch eine Mikrotiterplatte oder ein sonstiges Objekt mit mindestens einem Probenbehälter 5 von der Objekthalterung 7 getragen.

Zwischen dem Kondensor 4 und dem Probenbehälter 5 befindet sich ein adaptives Ablenkungselement 8, in dem sich eine Ablenkungselement-Flüssigkeit 9 befindet. Die Ablenkungselement-Flüssigkeit 9 ist für die Strahlung des Beleuchtungsbündels 3 transparent, bildet im Falle der Fig. 1 für das Beleuchtungsbündel 3 eine Eintrittsfläche 29 und kann beispielsweise Wasser sein. Vorzugsweise aber nicht zwingend werden für das Ablenkungselement 8 Flüssigkeiten verwendet, die vom optischen Verhalten dem der Objektflüssigkeit 6, z.B. eines Nährmediums, entsprechen. Hierbei sind Flüssigkeiten mit gegenüber Wasser erhöhter Viskosität eher als vorteilhaft anzusehen.

Wie in den Fig. 2a und 3a gezeigt, kann die Ablenkungselement-Flüssigkeit 9 zum Teil mit einer Abdeckung 10 versehen sein, die ebenfalls transparent für die eingesetzte Strahlung des Beleuchtungsbündels 3 ist und somit dessen Eintrittsfläche 29 zum Ablenkungselement 8 bildet. Die Abdeckung 10, die beispielsweise durch eine Petrischale gebildet sein kann, verhindert, dass Wellen oder andere Unebenheiten der Oberfläche der Ablenkungselement-Flüssigkeit 9, die zum Beispiel durch Vibrationen erzeugt werden, einen unerwünschten Einfluss nehmen. Die Funktionsweise des Ablenkungselements 8 wird weiter unten näher dargestellt.

Im weiteren Verlauf passiert das Beleuchtungsbündel 3 ein Objektiv 11, welches einen Phasenring 12 aufweist. Der Phasenring 12 umfasst ein phasenverschiebendes Verzögerungselement sowie einen Graufilter (beides hier nicht im Detail dargestellt), wodurch der auftreffende Anteil des Beleuchtungsbündels 3 abgeschwächt und in der Phase verschoben wird. Im Anschluss an das Objektiv 11 durchläuft die Strahlung eine je nach Art des Phasenkontrastmikroskops optionale Tubuslinse 13 sowie eine Bertrandlinsen-Einheit 14, bevor sie auf den Bildsensor 15 einer Kamera 16 trifft.

Um das Ziel einer möglichst kontrastreichen Abbildung der durchleuchteten Probe zu erreichen, soll mittels eines von der Probe ungebeugten Anteils des Beleuchtungsbündels 3 die ringförmige Öffnung der Phasenblende 2 vollständig auf den Phasenring 12 abgebildet werden. Dieser im Folgenden als Direktstrahlung bezeichnete von der Probe ungebeugte Anteil des Beleuchtungsbündels 3 wird - wie bereits erwähnt - im Phasenring 12 abgeschwächt und phasenverschoben. Ein von der Probe gebeugter Anteil des Beleuchtungsbündels 3 hingegen läuft am Phasenring 12 vorbei und interferiert mit der Direktstrahlung zu der kontrastreichen Mikroskopabbildung der Probe. Die Abbildung wird mit einem Okular oder - wie hier als vorteilhafte Variante dargestellt - einem Bildsensor 15 einer Kamera 16 betrachtet.

Fig. 2a zeigt eine Situation, bei der das Beleuchtungsbündel 3 auf das Zentrum des Probenbehälters 5 trifft. Dort ist ein Meniskus der Oberfläche der Objektflüssigkeit 6 nicht oder nur schwach ausgebildet. Das Beleuchtungsbündel 3 fällt somit ohne durch den Probenbehälter 6 und seine Objektflüssigkeit 6 eine wesentliche Brechung zu erfahren auf das Objektiv 11 und den Phasenring 12 (siehe Fig. 1). Der Phasenring 12 und die Phasenblende 2 sind für diesen durch den Probenbehälter 5 ungestörten Strahlungsverlauf gegeneinander ausgerichtet, so dass die Direktstrahlung vollständig auf den Phasenring 12 fällt.

Fig. 3a dagegen zeigt die Situation, in der ein Probenbereich untersucht werden soll, der näher zum Rand des Probenbehälters 5 positioniert ist, wo aufgrund der Meniskusbildung der Spiegel der Objektflüssigkeit 6 bereits eine merkliche Neigung zur Horizontalen ausgebildet hat. Ohne besondere Maßnahmen würde das Beleuchtungsbündel 3 beim Eintritt in die Objektflüssigkeit 6 gebrochen, wodurch die Direktstrahlung den Phasenring 12 zumindest zum Teil verfehlen würde. Um diesem Effekt entgegenzuwirken, wird das Ablenkungselement 8 geneigt, so dass eine für die Strahlung als Austrittsfläche 23 dienende untere Grenzfläche des Ablenkungselements 8 nicht mehr senkrecht zur Hauptstrahlungsrichtung 28 ist und an der Austrittsfläche 23 eine Brechung des Beleuchtungsbündels 3 mit einer Änderung der Hauptstrahlungsrichtung 28 erfolgt. Das Maß der Neigung des Ablenkungselements 8 und damit der Ablenkung der Hauptstrahlrichtung ist so zu wählen, dass die Hauptstrahlungsrichtung 28 nach Austritt des Beleuchtungsbündels 3 aus dem Probenbehälter 5 parallel zur optischen Achse des sich in Strahlrichtung an den Probenbehälter 5 anschließenden Teils des Mikroskops ist. Ist die optische Dichte des Ablenkungselements 8 gleich der optischen Dichte der Objektflüssigkeit 6, wird die Neigung bevorzugt so gewählt, dass die Austrittsfläche 23 parallel zur Tangente an der Oberflächenkrümmung der Objektflüssigkeit 6 ausgerichtet ist. Bei sich unterscheidenden optischen Dichten von Ablenkungselement 8 und Objektflüssigkeit 6 sind entsprechende Winkel zwischen der Tangente an der Oberflächenkrümmung und der Austrittsfläche 23 zielführend. Maßgeblich für die Tangente ist der Ort des Schnittpunktes der Hauptstrahlungsrichtung 28 oder optischen Achse des Beleuchtungsbündels 3 mit der Oberfläche der Objektflüssigkeit 6. Um eine entsprechende Kipp- oder Schwenkbewegung zu ermöglichen, ist das Ablenkungselement 8 auf einer um zwei Schwenkachsen schwenkbare und hier nicht dargestellte Halterung gelagert. Die beiden Schwenkachsen sind senkrecht zur Hauptstrahlungsrichtung 28 des Beleuchtungsbündels 3.

Aufgrund der Schwenkung verändert das Ablenkungselement 8 seine Form, da die Oberfläche der Ablenkungselement-Flüssigkeit 9 weiterhin senkrecht zur Richtung der Schwerkraft ausgerichtet ist. Das Ablenkungselement 8 bildet somit mittels der in Fig. 2a und 3a nicht dargestellten Mittel zum Verschwenken ein adaptives Prisma.

Das Beleuchtungsbündel 3 erfährt bei einem um einen Winkel ϕ verschwenkten Ablenkungselement 8 durch die Austrittsfläche 23 eine Brechung, d.h. eine Ablenkung der Hauptstrahlungsrichtung 28, und wird an der Oberfläche der Objektflüssigkeit 6 gebrochen. Beim Austritt aus dem Probenbehälter 6 erfährt das Beleuchtungsbündel 3 eine weitere Brechung, so dass die Hauptstrahlungsrichtung 28 wieder parallel zu der vor Auftreffen auf das Ablenkungselement 8 gegebenen ursprünglichen Hauptstrahlungsrichtung 28 läuft. Es hat lediglich eine seitliche Verschiebung stattgefunden.

Die aufgrund der Brechungen an Ablenkungselement 8 und Objektflüssigkeit 6 gegebene Parallelverschiebung des Beleuchtungsbündels 3 wird kompensiert durch eine entsprechende Verschiebung der Phasenblende 2 und ihrer Öffnung 30. Die Verschiebung der Phasenblende ist in Fig. 3b symbolisiert dargestellt. Eine derartige Verschiebung ist in der in Fig. 2a gezeigten Situation nicht erforderlich, wie Fig. 2b symbolisch darstellt. Eine Verzerrung der Abbildung aufgrund des Flüssigkeitsmeniskus der Objektflüssigkeit 6 wird auf diese Weise weitgehend oder im Idealfall vollständig vermieden.

Die in den Fig. 1, 2a und 3a nur schematisch dargestellte Phasenblende 2 kann somit durch einen üblichen starren Phasenblendenkörper realisiert sein, der lediglich innerhalb einer zu seiner Mittelebene parallelen Ebene verschiebbar ist.

Alternativ ist es auch möglich, die Phasenblende 2 durch eine Flüssigkeitskristallanzeige (LCD) zu realisieren, wie sie aus der US 2012/0257040 A1 - wie eingangs dargestellt - bekannt ist. Auf diese Weise kann eine mechanische Verschiebung innerhalb der Ebene vermieden werden. Das LCD könnte als elektronisch veränderbare Phasenblende 2 fungieren, wobei vorteilhafter Weise nicht nur eine Verschiebung der Phasenblendenöffnung 30 als Ganzes möglich ist, sondern auch eine Veränderung der Form der Phasenblendenöffnung 30 durchgeführt werden kann. Letzteres kann erforderlich werden, sofern - zum Beispiel auf Grund der besonderen Stärke der Krümmung des Meniskus der Objektflüssigkeit 6 - es doch zu einer verzerrten Abbildung der Phasenblendenöffnung 30 kommt.

Die in Fig. 1 dargestellte Bertrandlinsen-Einheit 14 wird im Folgenden anhand der Fig. 4 und 5 näher erläutert. Die hier dargestellte Variante der Bertrandlinsen-Einheit 14 ist nicht zwingend. Es ist alternativ möglich, in dem erfinderischen Phasenkontrastmikroskop eine an sich bekannte Bertrandlinse in den Strahlengang des Phasenkontrastmikroskops einzuschwenken oder mit einem halbdurchlässigen Spiegel für die Zuschaltung einer externen Bertrandlinse zu sorgen. Es ist aus dem Stand der Technik bekannt, dass eine Bertrandlinse zur Kontrolle der Abbildung der Öffnung der Phasenblende 2 auf den Phasenring 12 eingesetzt wird.

Als vorteilhafte Ausbildungsvariante zeigen die Fig. 1 sowie ausschnittsweise Fig. 4 und 5 ein Phasenkontrastmikroskop mit Bertrandlinsen-Einheit 14, welche sich permanent im Strahlengang des Phasenkontrastmikroskops befinden kann. Um zwischen einer Abbildung der Objektebene, innerhalb der die Probe im Probenbehälter 5 angeordnet ist, und einer Abbildung der bildseitigen Mikroskopbrennebene, in der der Phasenring 12 sitzt, auf den Bildsensor 15, umschalten zu können, ist die Bertrandlinsen-Einheit 14 schaltbar und umfasst eine z.B. elektronisch deformierbare Linse 17. Hierdurch ist es möglich, ein optisches System zu erzeugen, welches in der Lage ist, bei Bedarf sowohl ein Bild der rückseitigen Brennebene bzw. des dort liegenden Phasenrings 12 zu liefern als auch das System auf die Probe zu fokussieren. Zur Umschaltung auf einen Bertrand-Linsenbetrieb (erster Betriebszustand) wird die fokusvariable Linse 17 von einer kleinen auf eine große Brennweite umgeschaltet, so dass das koordinierte Strahlenbündel zwischen Objektiv 11 und Tubuslinse 13 in der Weise verändert wird, dass ein Bild des Phasenrings 12 auf dem Bildsensor 15 erzeugt wird. Diese Situation ist in Fig. 4 dargestellt.

Fig. 5 zeigt die Situation bei "ausgeschalteter" Bertrandlinsen-Einheit 14. In diesem Fall ist die Probe auf dem Bildsensor 15 scharf abgebildet

Das erfindungsgemäße Phasenkontrastmikroskop ermöglicht ein automatisiertes Einstellen der Position oder der Schwenkwinkel des Ablenkungselements 8 und/oder der Position und ggf. der Form der Phasenblende 2. Dabei kann beispielsweise wie folgt vorgegangen werden:
Zunächst wird die Krümmung der Oberfläche der Objektflüssigkeit 6 in Abhängigkeit der Position des Probenbehälters innerhalb seiner X-Y-Ebene aus bekannten Parametern, wie zum Beispiel die Temperatur T, die Viskosität V, der Durchmesser des Probenbehälters D sowie dem Füllstand der Objektflüssigkeit 6, vor dem Abbildungsvorgang analytisch angenähert. Die Oberflächenkrümmung lässt sich dabei der Einfachheit halber über die Winkel ϕ' und θ' zwischen der Tangente der Oberflächenkrümmung und der planen Fläche des Bodens des Probenbehälters 8 beschreiben. Um nun die zur Kompensation der Brechung des Beleuchtungsbündels 3 an der Objektflüssigkeit 6 nötige Ablenkung des Beleuchtungsbündels 3 zu gewährleisten, werden unter der Annahme zumindest ähnlicher optischer Dichten von Ablenkungselement 8 und Objektflüssigkeit 6 die Auslenkwinkel ϕ und θ des Ablenkungselements (in Fig. 1 ist lediglich ϕ dargestellt) zunächst den Winkelwerten ϕ' und θ' der Tangente der Objektflüssigkeitsoberfläche oberhalb des Zentrums der zu beobachtenden Probenstelle gleichgesetzt. Bei stark unterschiedlichen optischen Dichten können auch angepasste Winkelwerte eingesetzt werden. Außerdem wird die Phasenblende 2 um ein zu der erwarteten Parallelverschiebung der Hauptstrahlrichtung 28 passendes Maß in ihrer zur Strahlrichtung des Quell-Lichtbündels 1 senkrechten x-/y-Ebene verschoben.

Anschließend wird mittels der Bertrandlinsen-Einheit 14 zur Abbildung des Phasenrings 12 auf den Bildsensor 15 geschaltet. Dies erfolgt mittels einer in Fig. 1 schematisch dargestellten Steuerung 19 für die Bertrandlinsen-Einheit 14. Das auf dem Bildsensor 15 der Kamera 16 erzeugte Abbild des Phasenringes wird automatisiert ausgewertet und hinsichtlich der Überlappung des Abbildes der Öffnung der Phasenblende 2 mit dem Phasenring 12 überprüft. Durch schrittweises Verstellen der Parameter für Roll- und Nickwinkel ϕ bzw. θ des Ablenkungselements 8 mittels einer Ablenkungselementsteuerung 20 sowie einer x-/y-Verschiebung und erforderlichenfalls einer Formänderung der Phasenblende 2 mittels einer Phasenblendensteuerung 21 lässt sich die Überlappung der Abbilder der Öffnung der Phasenblende 2 einerseits und des Phasenrings 2 andererseits in situ beobachten und optimieren. Die Überlappung der Abbilder lässt sich nicht nur anhand des Zwischenbildes des Phasenrings 12 beurteilen, sondern alternativ oder zusätzlich direkt anhand des wiederhergestellten Bildkontrastes des Objektbildes, zu dem durch Umschalten der Bertrandlinsen-Einheit 14 zurückgeschaltet werden kann.

Alternativ zum schrittweisen Verändern des Schwenkens des Ablenkungselements 8 und der Phasenblende 2 kann die Oberflächenkrümmung direkt aus der Zwischenbildebene ermittelt werden, indem anstelle der Phasenblendenöffnung ein bestimmtes Muster, zum Beispiel eine Gitterstruktur, auf die hintere Objektivbrennebene abgebildet wird. Das Muster, welches in den Fig. nicht dargestellt ist, kann vorteilhaft mittels eines elektronisch steuerbaren adaptiven Elements erzeugt werden, zum Beispiel mittels desselben LCD, das auch als Phasenblende 2 fungieren kann. Anhand von im Bildsensor 15 festgestellten Verzerrungen des aufgegebenen Musters kann über Algorithmen die Form der durch die Krümmung der Oberfläche der Objektflüssigkeit 6 erzeugten Musterverzerrung ermittelt werden. Aus diesen Informationen können die Parameter zur Adaption der Phasenblende 2 und des Ablenkungselements 8 berechnet werden.

### Bezugszeichenliste

- 1: Quell-Strahlungsbündel
- 2: Phasenblende
- 3: Beleuchtungsbündel
- 4: Kondensor
- 5: Probenbehälter
- 6: Objektflüssigkeit
- 7: Objekthalterung
- 8: Ablenkungselement
- 9: Ablenkungselement-Flüssigkeit
- 10: Abdeckung
- 11: Objektiv
- 12: Phasenring
- 13: Tubuslinse
- 14: Bertrandlinsen-Einheit
- 15: Bildsensor
- 16: Kamera
- 17: deformierbare Linse
- 19: Steuerung Bertrandlinsen-Einheit
- 20: Ablenkungselementsteuerung
- 21: Phasenblendensteuerung
- 22: Steuerung Objekthalterung
- 23: Austrittsfläche
- 28: Hauptstrahlungsrichtung
- 29: Eintrittsfläche
- 30: Öffnung der Phasenblende

## Patentansprüche

1. Verfahren zur Phasenkontrastmikroskopie an einer Probe, welche in einem eine Objektflüssigkeit (6) aufweisenden Probenbehälter (5) angeordnet ist, bei dem
a) ein von der Probe ungebeugter, als Direktstrahlung dienender Anteil eines Beleuchtungsbündels (3) auf ein Phasenverschiebungselement (12) gegeben wird und
b) zur Kompensation einer aufgrund optischer Brechung an der Objektflüssigkeit (6) gegebenen Änderung der Hauptstrahlungsrichtung (28) des Beleuchtungsbündels (3) das Beleuchtungsbündel (3) vor Eintritt in die Objektflüssigkeit (6) mittels eines in seiner Form veränderbaren, eine Eintrittsfläche (29) und eine Austrittsfläche (23) und zwischen Eintrittsfläche (29) und Austrittsfläche (23) eine viskose Masse (9) aufweisenden optischen Ablenkungselements (8) abgelenkt wird,
**dadurch gekennzeichnet, dass**
c) die Eintrittsfläche (29) durch eine in einem Schwerefeld gebildete Oberfläche der viskosen Masse (9) vorgegeben ist und
d) das Ablenkungselement (8) zur steuerbaren Veränderung des Winkels zwischen Eintrittsfläche (29) und Austrittsfläche (23) um eine Schwenkachse verschwenkt wird.

2. Verfahren nach Anspruch 1, **dadurch gekennzeichnet, dass** eine am Ort des Phasenverschiebungselements (12) gegebene Überlappung von Direktstrahlung und Phasenverschiebungselement (12) kontrolliert und zur Optimierung der Überlappung die Querschnittsgeometrie des Beleuchtungsbündels (3) und/oder die in einer Ebene senkrecht zur Hauptstrahlungsrichtung (28) des Beleuchtungsbündels (3) gegebene Position vor dessen Auftreffen auf das Ablenkungselement (8) mittels mindestens eines veränderbaren optischen Anpasselements verändert wird.

3. Verfahren nach Anspruch 1 oder 2, **dadurch gekennzeichnet, dass** im Strahlengang vor dem Probenbehälter (5) ein optisches Muster erzeugt, eine im Bereich des Probenbehälters (5) erzeugte optische Verzerrung des Musters erfasst und das Maß der Musterverzerrung zur automatischen Steuerung der Position und/oder Form des optisches Ablenkungselements (8) und/oder mit Rückbezug auf Anspruch 2 zur Steuerung des optischen Anpasselements genutzt wird.

4. Phasenkontrastmikroskop, geeignet zur Mikroskopie einer Probe, welche in einem eine Objektflüssigkeit (6) aufweisenden Probenbehälter (5) angeordnet ist, mit
a) Mitteln zur Erzeugung eines Beleuchtungsbündels (3) und
b) einer Objekthalterung (7) zur Aufnahme des Probenbehälters (5),
c) mindestens einem im Strahlverlauf des Beleuchtungsbündels (3) vor der Objekthalterung (7) angeordneten, eine Eintrittsfläche (29) und eine Austrittsfläche (23) aufweisenden optischen Ablenkungselement (8) sowie Mitteln zur Veränderung der Form des optischen Ablenkungselements (8),
d) Mitteln zur steuerbaren Veränderung des Winkels zwischen Eintrittsfläche (29) und Austrittsfläche (23), wobei zwischen Eintrittsfläche (29) und Austrittsfläche (23) eine viskose Masse (9) angeordnet ist,
**dadurch kennzeichnet dass**
e) die Eintrittsfläche (29) durch eine in einem Schwerefeld gebildete Oberfläche der viskosen Masse (9) vorgegeben ist und
f) Mittel zum Verschwenken des Ablenkungselements (8) um mindestens eine Schwenkachse vorgesehen sind.

5. Phasenkontrastmikroskop nach Anspruch 4, **dadurch gekennzeichnet, dass** die Eintrittsfläche (29) durch ein mittelbar oder unmittelbar auf der Oberfläche der viskosen Masse (9) schwimmendes oder aufliegendes, starres und transparentes Abdeckungselement (10) gebildet ist.

6. Phasenkontrastmikroskop nach Anspruch 4 oder 5, **dadurch gekennzeichnet, dass** das Ablenkungselement (8) um mindestens eine zur Strahlrichtung des einfallenden Beleuchtungsbündels (3) senkrechten Achse schwenkbar ist.

7. Phasenkontrastmikroskop nach einem der Ansprüche 4 bis 6, **gekennzeichnet durch** Mittel zur Beobachtung der Überlappung eines von der Probe ungebeugten, als Direktstrahlung dienenden Anteils des Beleuchtungsbündels (3) mit einem Phasenverschiebungselement (12) sowie durch mindestens ein veränderbares optisches Anpasselement zur Veränderung der Querschnittsgeometrie des Beleuchtungsbündels (3) und/oder seiner in einer Ebene senkrecht zur Hauptstrahlungsrichtung (28) des Beleuchtungsbündels (3) gegebenen Position.

8. Phasenkontrastmikroskop nach Anspruch 7, **dadurch gekennzeichnet, dass** die Mittel zur Beobachtung der Überlappung eine Bertrand-Linseneinheit (14) mit mindestens einer in ihrer Fokuslage variablen formbaren Linse (17) und Mittel (19) zur Steuerung der mindestens einen formbaren Linse (17) umfassen.

9. Phasenkontrastmikroskop nach einem der Ansprüche 4 bis 8, **gekennzeichnet durch** im Strahlengang vor dem Probenbehälter (5) angeordnete Mittel zur Erzeugung eines optischen Musters, Mittel zur Bestimmung der im Bereich des Probenbehälters bewirkten optischen Verzerrung des Musters sowie Mittel (20) zur Steuerung der Position und/oder Form des optisches Ablenkungselements (8) und/oder bei Rückbezug auf Anspruch 7 oder 8 zur Steuerung des optischen Anpasselements.

## Claims

1. A method for phase-contrast microscopy on a specimen, which is arranged in a specimen vessel (5) having an object liquid (6), in which
a) a component of an illumination beam (3), which serves as direct radiation and has not been diffracted by the sample, is applied to a phase-shifting element (12) and
b) in order to compensate for a change in the main radiation direction (28) of the illumination beam (3) that occurs due to optical refraction at the object liquid (6) the illumination beam (3) is deflected before it enters the object liquid (6) by way of an optical deflection element (8) which is modifiable in terms of its shape and which has an entry surface (29) and an exit surface (23) and a viscous mass (9) arranged between entry surface (29) and exit surface (23)
**characterized in that**
c) the entry surface (29) is determined by a surface of the viscous mass (9) that is formed in a gravity field and
d) for controllably changing the angle between the entry surface (29) and the exit surface (23) the deflection element (8) is swivelled about at least one swivel axis.

2. The method according to claim 1, **characterized in that** an overlap of direct radiation and phase-shifting element (12), occurring at the location of the phase-shifting element (12), is checked and, in order to optimize the overlap the cross-section geometry of the illumination beam (3) and/or the position, as it is in a plane perpendicular to the main radiation direction (28) of the illumination beam (3), is changed before it is incident on the deflection element (8), using at least one changeable optical adaptation element.

3. The method according to claim 1 or 2, **characterized in that** in the beam path in front of the specimen vessel (5) an optical pattern is produced, an optical distortion of the pattern that is produced in the region of the specimen vessel (5) is captured, and the extent of the pattern distortion is used to automatically control the position and/or shape of the optical deflection element (8) and/or, with reference back to claim 2, to control the optical adaptation element.

4. A phase-contrast microscope, suitable for observing a specimen under the microscope, which specimen is arranged in a specimen vessel (5) that includes an object liquid (6), comprising
a) means for producing an illumination beam (3), and
b) an object holder (7) for holding the specimen vessel (5),
c) at least one optical deflection element (8), which is arranged in the beam path of the illumination beam (3) in front of the object holder (7) and has an entry surface (29) and an exit surface (23), and means for modifying the shape of the optical deflection element (8),
d) means for controllably changing the angle between entry surface (29) and exit surface (23) wherein a viscous mass (9) is arranged between entry surface (29) and exit surface (23),
**characterized in that**
e) the entry surface (29) is determined by a surface of the viscous mass (9) that is formed in a gravity field, and
f) means for swivelling the deflection element (8) about at least one swivel axis are provided.

5. The phase-contrast microscope according to claim 4, **characterized in that** the entry surface (29) is formed by a rigid and transparent cover element (10) which floats or lies indirectly or directly on the surface of the viscous mass (9).

6. The phase-contrast microscope according to claim 4 or 5, **characterized in that** the deflection element (8) is swivable about at least one axis perpendicular to the beam direction of the incident illumination beam (3).

7. The phase-contrast microscope according to one of the claims 4 to 6, **characterized by** means for observing the overlap of a component of the illumination beam (3), that has not been diffracted by the specimen and serves as direct radiation, with a phase-shifting element (12) and by at least one changeable optical adaptation element for changing the cross-section geometry of the illumination beam (3) and/or its position determined in a plane perpendicular to the main radiation direction (28) of the illumination beam (3).

8. The phase-contrast microscope according to claim 7, **characterized in that** the means for observing the overlap comprise a Bertrand lens unit (14) having at least one lens (17), which is variable in terms of its focal position and shapeable, and means (19) for controlling the at least one shapeable lens (17).

9. The phase-contrast microscope according to one of claims 4 to 8, **characterized by** means for producing an optical pattern said means being arranged in the beam path in front of the specimen vessel (5), means for determining the optical distortion of the pattern caused in the region of the specimen vessel, and means (20) for controlling the position and/or shape of the optical deflection element (8) and/or, with reference back to claim 7 or 8, for controlling the optical adaptation element.

## Revendications

1. Procédé de microscopie à contraste de phase sur un échantillon disposé dans un récipient (5) à échantillon présentant un liquide d'objet (6), et dans lequel :
a) une partie d'un faisceau d'éclairage (3) servant de rayonnement directe et non dévié par l'échantillon est appliquée sur un élément de déphasage (12) et
b) pour la compensation d'une modification de la direction (28) de rayonnement principal du faisceau d'éclairage (3) qui résulte de la diffraction optique sur le liquide d'objet (6), le faisceau d'éclairage (3) est avant l'entrée dans le liquide d'objet (6) dévié au moyen d'un élément optique de déviation (8) déformable et présentant une surface d'entrée (29), une surface de sortie (23) et une masse visqueuse (9) entre la surface d'entrée (29) et la surface de sortie (23),
**caractérisé en ce que**
c) la surface d'entrée (29) est prédéfinie par une surface de la masse visqueuse (9) formée dans un champ de pesanteur et
d) l'élément de déviation (8) est incliné autour d'un axe de pivotement pour modifier de manière contrôlée l'angle entre la surface d'entrée (29) et la surface de sortie (23).

2. Procédé selon la revendication 1, **caractérisé en ce qu'**une superposition du rayonnement direct et de l'élément de déphasage (12) obtenue sur le site de l'élément de déphasage (12) est contrôlée et **en ce que** pour l'optimisation de la superposition, la géométrie de la section transversale du faisceau d'éclairage (3) et/ou la position atteinte dans un plan perpendiculaire à la direction (28) de rayonnement principal du faisceau d'éclairage (3) avant son incidence sur le élément de déviation (8) est modifiée au moyen d'au moins un élément optique d'adaptation modifiable.

3. Procédé selon les revendications 1 ou 2, **caractérisé en ce qu'**un motif optique est formé en avant du récipient (5) à échantillon dans le parcours des rayons, **en ce qu'**une distorsion optique de l'échantillon produite au niveau du récipient (5) à échantillon est saisie et **en ce que** l'amplitude de la distorsion de l'échantillon est utilisée pour commander automatiquement la position et/ou la forme du élément de déviation (8) et/ou à référence à la revendication 2 pour la commande de l'élément optique d'adaptation.

4. Microscope à contraste de phase convenant pour la microscopie d'un échantillon disposé dans un récipient (5) à échantillon présentant un liquide d'objet (6), le microscope présentant :
a) des moyens de formation d'un faisceau d'éclairage (3) et
b) un porte-objet (7) qui reprend le récipient (5) à échantillon,
c) au moins un élément de déviation (8) disposé en avant du porte-objet (7) dans le parcours des rayons du faisceau d'éclairage (3) et présentant une surface d'entrée (29) et une surface de sortie (23), ainsi que des moyens de modification de la forme de l'élément de déviation (8),
d) des moyens de modification contrôlée de l'angle entre la surface d'entrée (29) et la surface de sortie (23), une masse visqueuse (9) étant disposée entre la surface d'entrée (29) et la surface de sortie (23),
**caractérisé en ce que**
e) la surface d'entrée (29) est prédéfinie par une surface de la masse visqueuse (9) formée dans un champ de pesanteur et
f) des moyens d'inclinaison de l'élément de déviation (8) autour d'au moins un axe de pivotement sont prévus.

5. Microscope à contraste de phase selon la revendication 4, **caractérisé en ce que** la surface d'entrée (29) est formée par un élément de recouvrement (10) rigide et transparent, flottant ou placé directement ou indirectement sur la surface de la masse visqueuse (9).

6. Microscope à contraste de phase selon les revendications 4 ou 5, **caractérisé en ce que** l'élément de déviation (8) peut pivoter autour d'au moins un axe perpendiculaire à la direction d'irradiation du faisceau d'éclairage (3) incident.

7. Microscope à contraste de phase selon l'une des revendications 4 à 6, **caractérisé par** des moyens d'observation de la superposition d'une partie du faisceau d'éclairage (3) non déviée par l'échantillon et servant d'irradiation directe avec un élément de déphasage (12) ainsi que par au moins un élément optique d'adaptation modifiable qui modifie la géométrie de la section transversale du faisceau d'éclairage (3) et/ou de sa position prise dans un plan perpendiculaire à la direction (28) de rayonnement principal du faisceau d'éclairage (3).

8. Microscope à contraste de phase selon la revendication 7, **caractérisé en ce que** les moyens d'observation de la superposition comprennent une unité (14) à lentille de Bertrand présentant au moins une lentille (17) formable dont la position du foyer peut être modifiée et des moyens (19) de commande de la ou des lentilles déformables (17).

9. Microscope à contraste de phase selon l'une des revendications 4 à 8, **caractérisé par** des moyens disposés en avant du récipient (5) à échantillon dans le parcours des rayons en vue de former un motif optique, des moyens de détermination de la distorsion optique de l'échantillon opérée au niveau du récipient à échantillon ainsi que des moyens (20) de commande de la position et/ou de la forme du élément de déviation (8) et/ou en référence aux revendications 7 ou 8, pour la commande de l'élément optique d'adaptation.
